## Europäisches Patentamt

## European Patent Office

## Office européen des brevets

(19)

(11) Veröffentlichungsnummer: **0 154 890**
**A1**

(12) **EUROPÄISCHE PATENTANMELDUNG**

(21) Anmeldenummer: **85102161.8**

(22) Anmeldetag: **27.02.85**

(51) Int. Cl.⁴: **F 02 M 21/02**

(30) Priorität: **27.02.84 IT 1981084**

(43) Veröffentlichungstag der Anmeldung: **18.09.85**
Patentblatt **85/38**

(84) Benannte Vertragsstaaten: **BE DE FR NL**

(71) Anmelder: **POLIAUTO Ing. Pietro Parietti & C. S. n. c., Via Emilia Pavese, 120, I-29100 Piacenza (IT)**

(72) Erfinder: **Parietti, Pietro, Via Emilia Pavese, 120, I-29100 Piacenza (IT)**
Erfinder: **Fagioli, Augusto, Via Emilia Pavese, 120, I-29100 Piacenza (IT)**

(74) Vertreter: **Franke, Karl Wilhelm, Dr., Steinsdorfstrasse 10, D-8000 München 22 (DE)**

(54) **Vorrichtung zum Steuern des Luft/Brenngas-Gemischs in Brennkraftmaschinen.**

(57) Die Vorrichtung (A) zum Variieren der für den Betrieb eines Verbrennungsmotors notwendigen Gasmenge wird zwischen den Druckminderer und das Venturirohr des Mischers zum Mischen von Luft und Gas eingebaut.

Diese Vorrichtung besteht aus einer Leitung (16), in der ein einstellbares Drosselorgan (18), das den Gasdurchgang steuert, betriebsmässig mit der auf den Unterdruck stromab der steuernden Drosselklappe ansprechenden Membran (30) gekoppelt ist. Dieser Unterdruck kann durch ein elektrisch betätigtes Ventil unterbrochen werden, das durch die Stellung dieser mit dem Gaspedal gekoppelten Drosselklappe gesteuert wird. Eine weitere Drosseleinrichtung kann entweder direkt in die Vorrichtung (A) eingebaut oder stromauf oder stromab davon vorgesehen sein. Diese Einrichtung besteht aus einer Leitung, in der ein oder mehrere einstellbare Drosselorgane, die den Gasdurchgang steuern, betriebsmässig mit elektromagnetischen Spulen gekoppelt sind, die getrennt in geeigneter Weise durch einen elektronischen Drehzahlmesser angesteuert werden. Eine weitere Einrichtung, die mit einem Fühler für die Temperatur des Gases am Ausgang des Druckminderers und mit einem elektrisch betätigten Ventil zum Abschalten des vom Motor kommenden und zum Verdampfen des Gases notwendigen Wassers gekoppelt ist, kann zusätzlich zu dem Zwecke vorgesehen sein, die Temperatur des Gases für die Speisung des Motors konstant zu halten. Ebenso kann zusätzlich eine Einrichtung vorgesehen werden, die bei vorgegebenen Werten für den Unterdruck stromab der Drosselklappe die Abschaltung der Minimalgasmenge am Ausgang des Druckminderers auslöst.

0154890

85102161.8                                          Pe 146/643
POLIAUTO                                            Dr.F/F
Ing. Pietro Parietti & C. S. n. c.


Vorrichtung zum Einstellen des Luft/Treibstoffgas-Gemischs
in Verbrennungsmotoren


Bei den heutigen mit Gas gespeisten Verbrennungsmotoren ist zwischen dem Gasdruckminderer und der Einrichtung zum Mischen des Gases mit Luft ein Register vorgesehen, das einmal so eingestellt wird, daß die Treibstoffabgabe begrenzt wird, wobei man einen Kompromiß zwischen dem Verbrauch und der Leistung des Motors zu erreichen sucht.

Es liegt jedoch auf der Hand, daß eine solche feste Einstellung dem sehr variablen Bereich für die dem Motor abverlangte Leistung nicht angemessen ist.

Die vorliegende Erfindung betrifft eine Vorrichtung, die sich dazu eignet, die vom Druckminderer abgegebene Gasmenge und damit die Mischung aus Luft und Treibstoffgas (Methan, GPL usw.) zu variieren, welche die Verbrennungsmotoren speist, um einem besseren Betrieb des Motors in Verbindung mit Wirtschaftlichkeit zu erhalten.

Eine solche Vorrichtung ist gekennzeichnet durch wenigstens ein in die Leitung für den Treibstoff zwischen der Gasquelle und der Zone stromauf des Abschaltorgans für das Treibstoffgemisch eingefügtes Drosselorgan, das betriebsmäßig mit Einrichtungen gekoppelt ist, die auf den stromab des Abschaltorgans auftretenden Unterdruck ansprechen, so daß sich bei einer Änderung des Ansaugdruckes auch die Menge des Treibstoffgases ändert, das den Motor speist.

Die Erfindung wird nunmehr unter Bezugnahme auf die beigefügten Zeichnungen erläutert, die aber nur beispielshalber zu verstehen sind, wobei

die Figur 1 das Schema einer Anlage ist, die einen Verbrennungsmotor mit verflüssigtem Gas speist und die eine Vorrichtung gemäß der Erfindung aufweist;

die Figur 2 ein Axialschnitt durch die Vorrichtung ist;

die Figur 3 ein Axialschnitt einen für sich allein gezeigten Ergänzungsteil der Vorrichtung ist;

die Figur 4 ein Diagramm der Arbeitsweise des Motors von Figur 1 ist, in dem die Drehzahl des Motors als Funktion des Ansaugunterdrucks betrachtet wird.

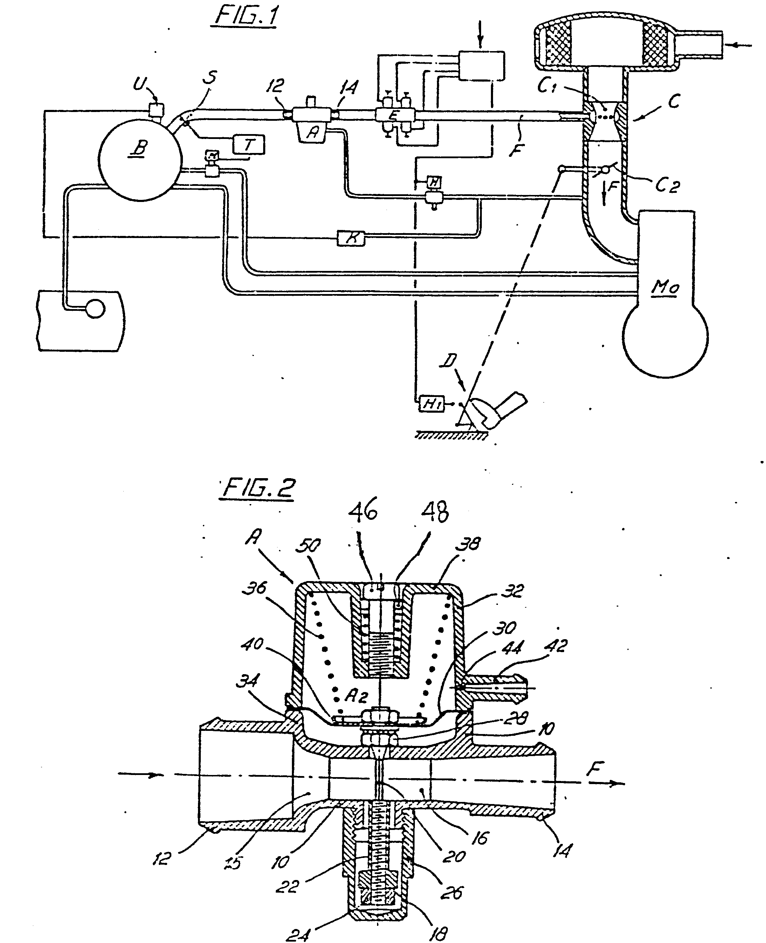

In der Darstellung in Figur 1 ist mit A die Vorrichtung gemäß der Erfindung bezeichnet und mit B der Druckminderer, der über den Mischer C den Motor Mo speist. Gemäß einer bevorzugten Ausführungsform besteht die Vorrichtung A (Figur 2) aus einem Gehäuse 10, in dem eine Leitung 15 mit einer zylindrischen Drosselkammer 16 vorgesehen ist, durch die eine teilweise mit Gewinde versehene Stange 20 und ein darauf aufgeschraubtes Register 22 hindurchgehen, das sich durch eine Kontermutter 24 in geeigneter Stellung festlegen läßt. Eine auf das Gehäuse 10 aufgeschraubte Schutzkappe 26 schützt die Stange 20 und das Register 22 mit der Kontermutter 24 auf der einen Seite.

Auf ihrer anderen Seite ist die Stange 20 mittels Mutter und Kontermutter fest mit einer Membran 30 verbunden, deren Rand zwischen dem Rand einer Haube 32 und einem Kranz 34 eingespannt ist, der oben auf dem Gehäuse 10 ausgebildet ist. Zwischen der Decke 38 der Haube 32 und einer auf der Stange 20 befestigten Endscheibe 40 ist eine Feder 36 angeordnet. Eine Einstellschraube 46, die mit einer ihr Losschrauben verhindernden Gegenfeder 50 und einem Druckdichtungsring 48 in die Haube 32 eingeschraubt ist, begrenzt den Hub der Stange 20.

Die Membran 30 und die Haube 32 begrenzen eine Kammer $A_2$, die über ein Verbindungsstück 42, das zur Dämpfung der vom Motor erzeugten Pulsationen mit einer kalibrierten Öffnung 44 versehen ist, mit dem Unterdruck stromab der Drosselklappe $C_2$ in Verbindung steht.

- 3 -

0154890

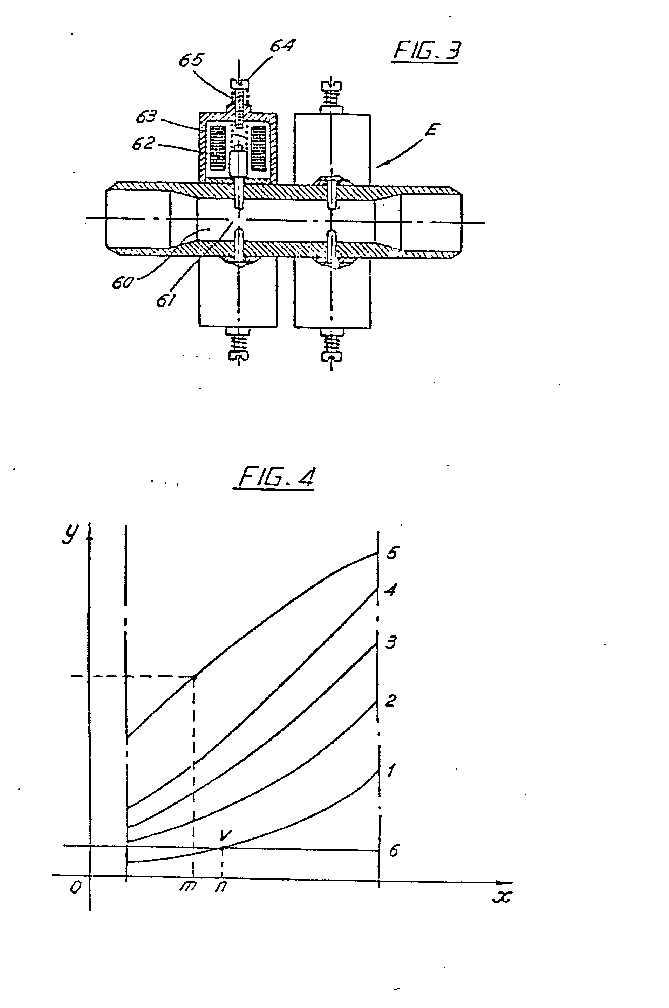

Um die Arbeitsweise der Vorrichtung A zu verstehen, ist es notwendig, die graphische Darstellung von Figur 4 zu analysieren, die den Verlauf der Unterdruckwerte "y" stromab der Drosselklappe $C_2$ eines Motors in Abhängigkeit von dessen Drehzahl "x" zeigt.

Die Kurve 1 zeigt den Zustand bei vollständig geöffneter Drosselklappe $C_2$ (volle Leistung), die Kurven 2, 3 und 4 gelten für immer stärker geschlossene Stellungen der Drosselklappe, während sich die Kurve 5 auf die Drosselklappenstellung bezieht, bei der die Motordrehzahl ihren Minimalwert hat.

Hingewiesen werden muß darauf, daß es bei in Drosselstellung befindlicher Drosselklappe zweckmäßig ist, mit gegenüber dem stöchiometrischen Wert abgemagertem Luft/Gas-Gemisch zufahren, während es im Zustand voller Leistung eines reicheren Gemisches bedarf.

Die Gerade 6 gibt den Unterdruckwert wieder, oberhalb dessen die Membran 30 die Wirkung der Feder 36 überwindet. Nachstehend soll dieser Wert als "Schwellenwert" bezeichnet werden.

Bei einem Vergleich der Kurven 2, 3, 4 und 5 mit der Geraden 6 sieht man, daß der Unterdruck des Motors immer einen größeren Wert aufweist als den "Schwellenwert", aus diesem Grunde überwindet die Membran 30 die Wirkung der Feder 36 und verschiebt sich zusammen mit der Stange 20 und dem Register 22 in Richtung auf die Einstellschraube 46, die ihren Hub begrenzt. Auf diese Weise verschließt das Register 22 die Leitung 16 teilweise unter entsprechender Verminderung der abgegebenen Gasmenge, die sich mittels der Einstellschraube 46 einstellen läßt. Bei einem Vergleich der Kurve 1 für volle Leistung jedoch mit der Geraden 6 stellt man einen Kreuzungspunkt V fest, der einer Drehzahl n des Motors entspricht; im Drehzahlbereich unterhalb n ist der vom Motor erzeugte Unterdruck kleiner als der "Schwellenwert", und daher bewegt sich die Membran 30 nicht aus ihrer Ruhelage.

Unter diesen Bedingungen geschieh die Einstellung der Gasmenge durch das Register 22, das mehr oder weniger auf die Stange 20 aufgeschraubt mehr oder weniger in die Leitung 16 hineinreicht, um die gewünschte Menge an abgegebenem Gas zu erhalten.

Im Drehzahlbereich oberhalb n ist der Unterdruck vom Motor größer als der Schwellenwert, und daher würde die Membran 30 in Funktion treten und die Stange 20 bis zur Hubbegrenzung durch die Schraube 46 verschieben.

Dies würde zu einer unerwünschten Verminderung der abgegebenen Gasmenge führen, weil die betrachtete Kurve 1 die Kurve für volle Motorleistung ist; um diesen negativen Effekt zu beseitigen, ist die Verwendung eines elektrisch betätigten Ventils H (Figur 1) vorgesehen, das unter Steuerung durch einen Schalter $H_1$ die Kammer $A_2$ der Vorrichtung A dann mit dem atmosphärischen Druck in Verbindung bringt, wenn das Ventil $C_2$ vollkommen geöffnet ist, wenn also das Gaspedal voll niedergedrückt ist und der Motor seine maximale Leistung abgeben soll.

Wenn in der Kammer $A_2$ der atmosphärische Druck herrscht, bleibt die Membran 30 in ihrer Ruhestellung mit der Folge maximaler Gasabgabe.

Aus der vorstehenden Beschreibung ist ersichtlich, daß im Zustand voller Öffnung der Drosselklappe $C_2$ die Vorrichtung gemäß der Erfindung neutralisiert wird.

Unter diesen Bedingungen kommt es häufig vor, daß das Register 22 allein nicht in der Lage ist, die Menge des abgegebenen Gases in optimaler Weise zu steuern über den gesamten Drehzahlbereich des Motors Mo.

Deshalb ist es erforderlich, in dem Kreis von Figur 1 eine Einrichtung E vorzusehen, die dann ihren Betrieb aufnimmt, wenn die Drosselklappe $C_2$ voll offen ist, und daher durch die Einrichtung $H_1$

gesteuert wird, die durch das Pedal D aktiviert wird, das die Drosselklappe $C_2$ betätigt. Eine solche Einrichtung E ist in Figur 3 veranschaulicht, und sie besteht aus einem oder mehreren einstellbaren Drosselorganen 61, die dazu dienen, in dem Rohr 60 für die Gaszuführung eine stärkere oder schwächere Einschnürung zu schaffen. Diese Drosselorgane sind jedes betriebsmäßig mit einer elektromagnetischen Spule 62 gekoppelt.

Bei nicht erregter Spule wird die Nadel 61 von einer Feder 63 in ihre Ruhelage in der Drosselleitung 60 gedrückt. Bei erregter Spule wird die Nadel je nach der Stellung der Einstellschraube 64 mehr oder weniger nach innen gezogen. Eine Gegenfeder 65 blockiert die Einstellschraube 64. Die Spulen werden eine nach der anderen von einem elektronischen Drehzahlmesser angesteuert. Je größer die Zahl dieser Drosselorgane ist, desto feiner wird die Regelung der Gasmenge bei Änderung der Motordrehzahl. Diese Einrichtung E kann auch in die Vorrichtung A von Figur 2 integriert werden, wobei dann die Nadel oder Nadeln 61 mehr oder weniger in die Drosselkammer 16 hineinragen.

Dieses durch die Vorrichtung A oder die Einrichtung E gebildete Drosselsystem ist umso wirksamer, je mehr die Temperatur des von dem Druckminderer B abgegebenen Gases konstant gehalten wird.

Dazu wird die Anlage von Figur 1 mit einem Temperaturfühler S ausgestattet, der die Temperatur des Gases erfaßt und ein elektrisch betätigtes Ventil M steuert, das im Druckminderer B mehr oder weniger Heizwasser umlaufen läßt, das beispielsweise durch die Wärme des Motors Mo geeignet erwärmt wird. Im voraus werden zwei Temperaturwerte t1 und t2 für das abgegebene Gas festgelegt, und wenn die Temperatur des Gases unterhalb des Wertes t1 liegt, hält die Einrichtung T das Ventil M offen, während dann, wenn die Temperatur des Gases höher ist als der Wert t2, die Einrichtung T das Ventil M geschlossen hält. Wenn die Temperatur des Gases zwischen den Werten t1 und t2 liegt, öffnet die Einrichtung T das Ventil M für kurze Perioden in regelmäßigen Intervallen.

0154890

Dieses besondere Steuerungssystem für das elektrisch betätigte Ventil M gestattet es, den Wert der Gastemperatur weitestgehend in dem vorgegebenen Temperaturbereich zu halten.

Weiter ist in der Anlage von Figur 1 der Druckminderer B mit einem elektrisch betätigten Ventil U ausgestattet, das unter Steuerung durch eine weitere Einrichtung K, die auf den Unterdruck stromab der Drosselklappe $C_2$ anspricht, die minimale Gaszuführung unterbricht. Diese Einrichtung steuert das Ventil U in der Weise, daß sie dieses schließt und die minimale Gaszuführung abschaltet, wenn die zu der Kurve 5 von Figur 4 gehörenden Werte höher sind als der Eichwert dieser Einrichtung, während das Ventil U bei unterhalb des Eichwertes liegenden Unterdruckwerten geöffnet wird.

Diese Einrichtung K hat den Zweck, die minimale Gaszuführung in all den Fällen zu optimieren in wirtschaftlicher Hinsicht, in denen die Rotation im Motor Mo ihren Antrieb nicht durch Verbrennungsvorgänge, sondern durch Trägheitsbewegung erhält.

Es versteht sich, daß an der beschriebenen Vorrichtung Abwandlungen und Abänderungen in Anpassung an die Einsatzbedingungen vorgenommen werden können; insbesondere kann eine solche Vorrichtung in den Mischer C oder auch in den Druckminderer B integriert werden. In analoger Weise können auch die ergänzenden Einrichtungen miteinander integriert werden, ohne den Bereich der Erfindung zu verlassen.

- 7 -

0154890

Patentansprüche

1. Vorrichtung zum Einstellen der Menge des Treibstoffs für die Speisung von Verbrennungsmotoren, insbesondere für mit brennbaren Gasen gespeiste Motoren, gekennzeichnet durch wenigstens ein in die Leitung (F) für den Treibstoff zwischen der Gasquelle (B) und der Zone stromauf des Abschaltorgans ($C_2$) für das Treibstoffgemisch eingefügtes Drosselorgan (18), das betriebsmäßig mit Einrichtungen (30) gekoppelt ist, die auf den stromab des Abschaltorgans ($C_2$) auftretenden Unterdruck ansprechen, so daß sich bei einer Änderung des Ansaugdruckes auch die Menge des Treibstoffgases für die Speisung des Motors ändert.

2. Vorrichtung nach Anspruch 1, dadurch gekennzeichnet, daß das Drosselorgan (18) aus einer Stange (20) und einem Register (22) besteht, die koaxial zueinander und relativ zueinander beweglich in eine kalibrierte Leitung (16) eingefügt sind, die den Durchgang des gasförmigen Treibstoffs steuert, so daß durch eine Relativverschiebung zwischen Stange und Register der Gasdurchgang sich unabhängig von einem Eingriff der auf den Unterdruck stromab des Abschaltorgans ($C_2$) ansprechenden Mittel regelt.

3. Vorrichtung nach Anspruch 1 oder 2, gekennzeichnet durch eine Membran oder dergleichen (30), die durch Federelemente (36) beaufschlagt zusammen mit einer Haube (32) eine Kammer ($A_2$) begrenzt, die stromab des Abschaltorgans ($C_2$) angeschlossen ist.

4. Vorrichtung nach einem der Ansprüche 1 bis 3, gekennzeichnet durch ein mit Anschlüssen (12, 14) versehenes Gehäuse (10), innerhalb dessen eine Leitung (16) von einem Drosselorgan (18) durchsetzt wird, das aus einer Gewindestange (20) und einem Register (22) besteht, das in diesem Gehäuse geführt ist.

0154890

5. Vorrichtung nach Anspruch 3, dadurch gekennzeichnet, daß die Verbindung zwischen der Kammer ($A_2$) und der Leitung stromab des Abschaltorgans ($C_2$) mittels einer kalibrierten Öffnung (44) erhalten ist.

6. Vorrichtung nach einem der Ansprüche 1 bis 5, gekennzeichnet durch ein regelbares Element (46) zum Steuern der Verstellung der Membran oder dergleichen (30) und damit des Drosselorgans (18)

7. Vorrichtung nach einem der Ansprüche 1 bis 6, dadurch gekennzeichnet, daß die Membran (30) mit ihrem Rand zwischen einem oben auf dem Gehäuse (10) vorgesehenen Kranz (34) und dem Rand einer Haube (32) eingeklemmt ist, die ein Verbindungsstück (42) für einen Anschluß zwischen der Kammer ($A_2$) und der Zone stromab des Abschaltorgans ($C_2$) aufweist.

8. Vorrichtung nach einem der Ansprüche 1 bis 7, dadurch gekennzeichnet, daß das untere Ende des Drosselorgans (18) aus dem Gehäuse (10) herausragt und das Ende der Gewindestange (20) mit einer Blockierschraube (24) versehen und in einer Kappe (26) angeordnet ist, während das mit der Gewindestange gekoppelte Register (22) im Gehäuse (10) geführt ist.

9. Vorrichtung nach einem der Ansprüche 1 bis 8, gekennzeichnet durch wenigstens ein ergänzendes Drosselorgan (61), das in der die Quelle (B) mit der Zone stromauf des Abschaltorgans ($C_2$) verbindenden Leitung angeordnet ist, und durch Steuereinrichtungen (62) für dieses Drosselorgan, die durch Einrichtungen betätigt werden, die auf die verschiedenen Betriebsbedingungen für den Motor ansprechen.

10. Vorrichtung nach Anspruch 9, dadurch gekennzeichnet, daß wenigstens eines der ergänzenden Drosselorgane in der kalibrierten Leitung (16) angeordnet ist.

0154890

11. Vorrichtung nach Anspruch 9, dadurch gekennzeichnet, daß eines oder mehrere der ergänzenden Drosselorgane (61) in eine Hilfsleitung (60) eingefügt sind, die stromauf oder stromab der Vorrichtung (A) liegt.

12. Vorrichtung nach einem der Ansprüche 1 bis 11, gekennzeichnet durch ein Dreiwegeventil (H), das vom Benutzer mittels eines Elements ($H_1$) betätigt wird und die Kammer ($A_2$) der Vorrichtung (A) wechselweise entweder mit der Zone stromab des Abschaltorgans ($C_2$) oder mit der Umgebung verbindet.

13. Anlage für die Speisung von Verbrennungsmotoren mit Gas, die mit Vorrichtungen nach einem oder mehreren der Ansprüche 1 bis 12 versehen ist, gekennzeichnet durch Temperaturmesser zum Erfassen der Gastemperatur am Ausgang des Druckminderers (B) zum Steuern des Durchgangs eines Heizfluids für das Gas.

14. Anlage für die Speisung von Verbrennungsmotoren mit Gas, die mit Vorrichtungen nach einem oder mehreren der Ansprüche 1 bis 12 versehen ist, gegebenenfalls in Kombination mit Anspruch 13, gekennzeichnet durch auf den Unterdruck stromab des Abschaltorgans ($C_2$) für das Treibstoffgemisch ansprechende Einrichtungen, die betriebsmäßig mit Steuerorganen für den Gasdurchgang bei Minimalbetrieb des Motors gekoppelt sind.

15. Druckminderer für die Speisung von Verbrennungsmotoren mit Gas, dadurch gekennzeichnet, daß er mit einer Vorrichtung nach einem oder mehreren der Ansprüche 1 bis 12 versehen ist.

16. Anlage nach Anspruch 11 oder 12, dadurch gekennzeichnet, daß in den Druckminderer eine Vorrichtung nach einem oder mehreren der Ansprüche 1 bis 12 integriert ist.

17. Anlage nach Anspruch 11 oder 12, dadurch gekennzeichnet, daß in den Mischer zum Mischen von Luft und Gas eine Vorrichtung nach einem oder mehreren der Ansprüche 1 bis 12 integriert ist.

1/2

0154890

FIG.1

FIG.2

FIG. 3

FIG. 4

# 0154890

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 202 926 (HALLBERG)<br><br>* Zusammenfassung; Seite 8, Zeilen 12-20; Seite 16, Zeilen 13-36; Seite 17, Zeilen 1-17, 30-35; Seite 18, Zeilen 1-8 * | 1,3,6, 12,15, 16 | F 02 M 21/02 |
| A | | 7 | |
| | --- | | |
| X | PATENTS ABSTRACTS OF JAPAN, Band 7, Nr. 24 (M-189)[1169], 29. Januar 1983; & JP - A - 57 176 334 (TSUYOSHI IKEDA) 29.10.1982 * Zusammenfassung * | 1,3 | |
| | --- | | |
| X | US-A-4 370 969 (ZARELLI) * Spalte 2, Zeilen 18-66; Figuren 1,2 * | 1,3,6 | **RECHERCHIERTE SACHGEBIETE (Int. Cl.4)** |
| A | | 2,4,7-10 | F 02 M<br>F 02 D |
| X | NL-A-7 710 432 (SCALETTI)<br><br>* Seite 1, Zeilen 1-15; Seite 2, Zeilen 14-22; Seite 3, Zeilen 8-36; Seite 4, Zeilen 1-27; Seite 5, Zeilen 3-35; Seite 6, Zeilen 1-35; Seite 7, Zeilen 1-36 * & FR - A - 2 365 703 | 1-8,15 ,16 | |
| | ---     -/- | | |

Der vorliegende Recherchenbericht wurde für alle Patentansprüche erstellt.

| Recherchenort<br>DEN HAAG | Abschlußdatum der Recherche<br>29-05-1985 | Prüfer<br>JORIS J.C. |
|---|---|---|

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 064 373 (EMCO WHEATON INT. LTD.) <br><br> * Seite 2, letzter Abschnitt; Seite 3; Seite 4, Zeilen 1-2; Seite 5, letzter Abschnitt; Seite 6, erster und letzter Abschnitt; Seite 7, Zeilen 1-2; Seite 8; Seite 10; Seite 14, letzter Abschnitt; Seite 15, erster Abschnitt; Figuren 1,2,4 *. | 1,3,7, 9,11, 15,16 | |
| X | FR-A-2 206 445 (LANDI DEN HARTOG) <br> * Seite 1, Zeilen 1-7, 26-35; Seite 2, Zeilen 11-29; Seite 3, Zeilen 16-20; Seite 5, Zeilen 8-38; Seite 6, Zeilen 1-4, 9-21, 27-38; Seite 7, Zeilen 1-3; Seite 8, Zeilen 2-4 * | 1,3,6, 7 | |
| A | | 2,4,8 | RECHERCHIERTE SACHGEBIETE (Int. Cl.4) |
| A | GB-A-1 327 513 (WAYNE McJONES) <br> * Seite 3, Zeilen 53-72; Seite 4, Zeilen 38-70; Seite 5, Zeilen 15-35, 43-53; Figur 3 * | 12 | |
| A | US-A-4 423 716 (GLASS) <br> * Spalte 3, Zeilen 29-32; Spalte 4, Zeilen 13-17 * | 13 | |

--- -/-

Der vorliegende Recherchenbericht wurde für alle Patentansprüche erstellt.

| Recherchenort <br> DEN HAAG | Abschlußdatum der Recherche <br> 29-05-1985 | Prüfer <br> JORIS J.C. |
|---|---|---|

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 159 701 (MURATA)<br>* Figur 3; Spalte 4, Zeilen 58-68; Spalte 5, Zeilen 1-3, 9-17 * | 14 | |

-----

RECHERCHIERTE
SACHGEBIETE (Int. Cl.4)

Der vorliegende Recherchenbericht wurde für alle Patentansprüche erstellt.

| Recherchenort<br>DEN HAAG | Abschlußdatum der Recherche<br>29-05-1985 | Prüfer<br>JORIS J.C. |
|---|---|---|